Europäisches Patentamt

European Patent Office

Office européen des brevets

(19)

(11) **EP 0 760 469 B1**

(12) **EUROPEAN PATENT SPECIFICATION**

(45) Date of publication and mention
of the grant of the patent:
**09.02.2005 Bulletin 2005/06**

(21) Application number: **96905069.9**

(22) Date of filing: **12.03.1996**

(51) Int Cl.$^7$: **G01J 3/36**, G01J 3/28

(86) International application number:
**PCT/JP1996/000612**

(87) International publication number:
**WO 1996/028713 (19.09.1996 Gazette 1996/42)**

(54) **OPTICAL SPECTRUM ANALYSER AND SPECTROSCOPE**

OPTISCHER SPEKTRUMANALYSATOR UND SPEKTROSKOP

ANALYSEUR DU SPECTRE OPTIQUE ET SPECTROSCOPE

(84) Designated Contracting States:
**DE FR GB**

(30) Priority: **15.03.1995 JP 5533495**
**16.03.1995 JP 5701295**
**07.02.1996 JP 2091496**

(43) Date of publication of application:
**05.03.1997 Bulletin 1997/10**

(73) Proprietor: **Yokogawa Electric Corporation
Tokyo 180-8750 (JP)**

(72) Inventors:
 • **SAMPEI, Yoshihiro**
   **Musashino-shi, Tokyo 180 (JP)**
 • **SUZUKI, Yasuyuki**
   **Musashino-shi, Tokyo 180 (JP)**
 • **TACHIKAWA, Yoshihiko**
   **Musashino-shi, Tokyo 180 (JP)**
 • **ARIHARA, Mamoru**
   **Musashino-shi, Tokyo 180 (JP)**

(74) Representative: **Henkel, Feiler & Hänzel
Möhlstrasse 37
81675 München (DE)**

(56) References cited:
**EP-A- 0 377 737        EP-A- 0 647 838
JP-A- 1 321 325         JP-A- 2 061 528
JP-A- 59 135 331        JP-A- 60 117 118
JP-A- 63 047 622        US-A- 5 210 590**

 • **PATENT ABSTRACTS OF JAPAN vol. 014, no.
   129 (P-1020), 12 March 1990 & JP 01 321325 A
   (HITACHI LTD), 27 December 1989**

**Description**

<u>TECHNICAL FIELD</u>

The present invention relates to an optical spectrum analyzer using a detector array and, more particularly, to improvements in the wavelength accuracy of an optical spectrum analyzer and improvements in the power level accuracy, as well as improvements for extension of the range of measured wavelengths.

<u>BACKGROUND ART</u>

The prior art optical spectrum analyzer indicates the average value of light power existing within a finite slit width, or a finite spectral width.

A spectrograph using a detector array has been urged to display the output from each device as it is, for the following reason. The spectrum of light under measurement is assumed to have an arbitrary shape. The spectral shape does not always have a 1:1 relation to the output from the device array.

Accordingly, it has been difficult to estimate the real spectral shape from the output from the device array.

Furthermore, the wavelength resolution and the range of measured wavelengths are determined by the number of the devices of the array, the pitch, the focal distance of the focusing mirror, and other factor. Trade-offs are made between the wavelength resolution and the range of measured wavelengths. Therefore, if one is improved, then the other is deteriorated. It is impossible to improve both at the same time.

EP-A-0 647 838, which has been published on September 27, 1994 and forms part of the state of the art only under Art. 54(3) EPC, discloses a spectrometer using a charge coupled device array as an image receiver in which an image of its entrance slit is tilted with respect to columns of pixels in the charge coupled device array and in which the height of the image of the entrance slit on the charge coupled device array is arranged to extend over two or more rows of pixels so that the image of the entrance slit is skewed over pixels in two adjacent columns. Means are provided to analyse the output of the pixels to provide information on the intensity distribution of each spectral line with respect to wavelengths having a resolution greater than that of the pitch of the pixels in each row of the charge coupled device array. Preferably, the pixels of the charge coupled device array are arranged in perpendicular columns and rows and the image of the entrance slit is tilted with respect to the columns of the charge coupled device array so that the rows of pixels on the charge coupled device array are generally aligned with the dispersion direction of the or each spectral order.

On the other hand, JP-A-59-13533 discloses a wavelength calculation of a spectrometer to calculate a wavelength by computing the true peak position based on vibration values at least at three points near the peak of an output signal of a sensor array. When estimation is made at three points near the maximum value by approximating on a linear line bent at the maximum point, the number of sensors at three points near the maximum value and the intensities of light at these points can be used to calculate the wavelength using a small microcomputer.

In view of the foregoing, the present invention has been made. It is an object of the present invention to provide an optical spectrum analyzer which assumes that light under investigation is an assemblage of monochromatic light rays (light whose spectral linewidth is much narrower than the resolution of the instrument such as laser light) and which can find the center wavelength of the monochromatic light and the total power by performing simple arithmetic operations from the outputs from adjacent devices of a device array.

It is another object of the invention to realize an optical spectrum analyzer capable of measuring ASE noise buried in laser light and of equivalently improving the dynamic range.

<u>DISCLOSURE OF THE INVENTION</u>

According to the present invention the above objects are achieved by an optical spectrum analyzer according to claim 1. The dependent claims are related to further advantageous aspects of the present invention.

In this structure, the outputs (theoretical values) from the photo detectors have been previously calculated. It is assumed that the n-th device of the device array produces a maximum output and deviates from the center of the outgoing beam impinging on the device array by an amount of $\Delta x$. The relation between the amount of deviation $\Delta x$ and the associated photo detector is found in advance.

If values are obtained by actual measurements, the amount of deviation $\Delta x$ is found from the above relation. Then, the center wavelength is found. Also, the total power can be calculated from the theoretical values of the outputs from the photo detectors and from the values obtained by actual measurements.

BRIEF DESCRIPTION OF THE DRAWINGS

Fig. 1 is a diagram of main portions of an optical spectrum analyzer according to the invention;
Fig. 2 is a diagram illustrating the relation between a device array and outgoing beam;
Fig. 3 is a flowchart illustrating the operation;
Fig. 4 is a diagram illustrating the relations of $p_{n-1}$, $p_n$, $p_{n+1}$ to $\Delta x$;
Fig. 5 is a diagram illustrating deviations of $\ln(p_{n+1}/p_{n-1})$ from straight lines;
Fig. 6 is a diagram illustrating the relation between $\ln(p_{n+1}/p_{n-1})$ and $\omega$;
Fig. 7 is a diagram illustrating the relation between $\ln(p_{n+1}/p_{n-1})$ and $\Delta x$;
Fig. 8 is a diagram comparing actually measured values $P_k$ and theoretical values $p_k$;
Fig. 9 is a graph illustrating dynamic range;
Fig. 10 is a flowchart illustrating additional functions of an arithmetic unit;
Fig. 11 is a diagram of main portions of a spectrometer according to the invention; and
Figs. 12-16 are diagrams of other spectrometer according to the invention.

BEST MODE FOR CARRYING OUT THE INVENTION

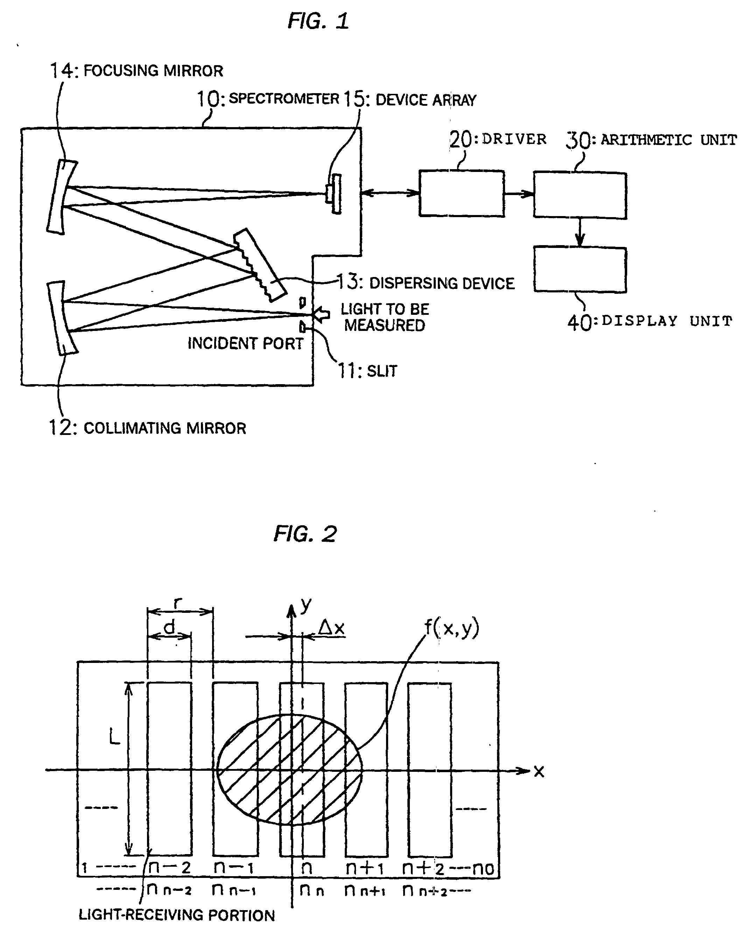

The present invention is hereinafter described in detail with reference to the accompanying drawings. Fig. 1 is a diagram illustrating the principle of operation of an optical spectrum analyzer according to the present invention. In Fig. 1, a spectrometer 10 has a light-dispersing device and a device array. A driver 20 drives the device array of the spectrometer 10 and reads out signals. Also shown are an arithmetic unit 30 and a display unit 40.

The spectrometer 10 comprises a slit 11, a collimating mirror 12, a light-dispersing device 13 such as a diffraction grating, a focusing mirror 14, and a device array 15. Light to be measured enters via the incident port of the slit 11, and is collimated by the collimating mirror 12. Then, the light enters the light-dispersing device 13. Light going out of the light-dispersing device 13 is focused onto the device array 15 by the focusing mirror 14. In this case, the light-dispersing device 13 is fixed. The position of the light spot falling on the device array 15 moves or shifts according to the wavelength of the light to be measured.

The algorithm of calculations possessed by the arithmetic unit 30 is next described.

As shown in Fig. 2, the device array consists of an array of stripe-shaped photo detective elements (devices or light-receiving devices). Let no be the number of the devices. Let L and d be the length and width, respectively, of each device. Let r be the pitch between the devices.

In this construction of the device array, the output from the n-th device assumes a maximum value. If the center of this n-th device is spaced $\Delta x$ from the center (x = 0) of the outgoing beam (having an intensity distribution of f (x, y)), the following procedure is adopted in accordance with the present invention. First, $\Delta x$ is found from the outputs from the devices $P_{n-2}$, $P_{n-1}$, $P_n$(max), $P_{n+1}$, .... Then, wavelengths are calculated by interpolation. Thus, the total power is estimated. This procedure is adopted under the following conditions:

(1) The spectral linewidth of the light under measurement is sufficiently small. In this example, laser light is assumed. The spread or shape of the outgoing beam is mainly determined by diffraction caused by lenses or by the power distribution at the incident port.
(2) It is assumed that numbers given to the devices of the array have been previously correlated with wavelengths, and that spaces between devices of the array can be interpolated with $\Delta x$.

We further assume that wavelengths $\lambda_1$, ..., $\lambda_{n-1}$, $\lambda_n$, $\lambda_{n+1}$, ..., $\lambda_0$ correspond to device numbers 1, ..., n - 1, n, n + 1, ..., $n_0$, respectively, and that the wavelength difference between devices is given by

$$\lambda_k - \lambda_{k-1} \fallingdotseq \Delta\lambda$$

where k = 2 to $n_0$.

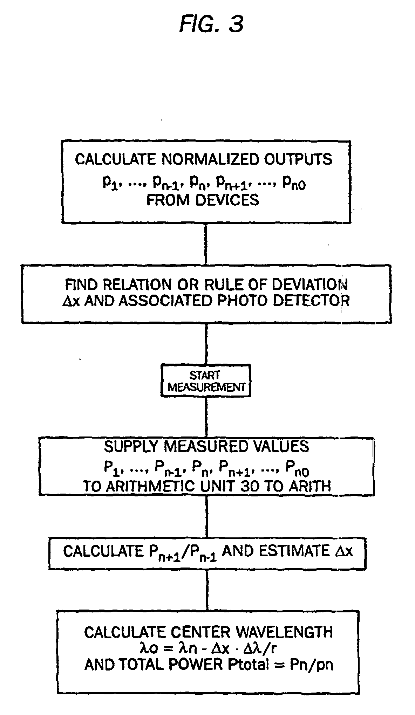

Under the above-described conditions, the center wavelength $\lambda_0$ and the total power $P_{total}$ can be found by estimating $\Delta x$, using actually measured values $P_1$, ..., $P_{n-1}$, $P_n$, $P_{n+1}$, ..., $P_{n0}$, as illustrated in the flowchart of Fig. 3.

The operation performed when the center wavelength $\lambda_0$ and the total power $P_{total}$ are found is described below.

Where the light intensity distribution g ($\xi$, $\eta$) at the incident port is of the Gaussian type in the same way as in the case of incidence on a single-mode fiber , if the total power is assumed to be 1, then we have

$$g(\xi, \eta) = (2 / \pi \, \omega_0^2) \exp\{-2(\xi^2 + \eta^2) / \omega_0^2\} \tag{1}$$

where $\omega_0$ is a spot size.

If the beam is converted or slightly diffracted by lenses, the light intensity distribution $f(x, y)$ on the device array remains the Gaussian type. If no loss occurs, then we have

$$f(x, y) = (2 / \pi \, \omega^2) \exp\{-2(x^2 + y^2) / \omega^2\} \tag{2}$$

where $\omega$ is a spot size.

Accordingly, the light power $P$ impinging on the k-th device is given by

$$P_k = \int_{-1/2}^{1/2} \int_{x_1}^{x_2} \frac{2}{\pi \omega^2} \exp - \frac{2(x^2 + y^2)}{\omega^2} \, dx \, dy$$

where

$$x_1 = (k - n) \, r - d / 2 + \Delta x$$

$$x_2 = (k - n) \, r + d / 2 + \Delta x$$

If it is assumed that $L / 2 \gg \omega$, and if the integral range (y-axis) can be replaced as follows

$$\int_{-1/2}^{1/2} \rightarrow \int_{-\infty}^{\infty}$$

Then, we have

$$\int_{-\infty}^{\infty} \exp\left(-\frac{2}{\omega^2} y^2\right) dy = \sqrt{\frac{\pi}{2}} \, \omega$$

Therefore,

$$P_k = \sqrt{\frac{2}{\pi}} \, \frac{1}{\omega} \int_{x_1}^{x_2} \exp\left(-\frac{2}{\omega^2} x^2\right) dx$$

Then, if a variable conversion given by $(2)^{1/2} \times x / \omega = t$ is done, then we have

$$P_K = \frac{1}{\sqrt{\pi}} \int_{t_1}^{t_2} e^{-t^2} \, dt$$

where

$$t_1 = (2)^{1/2} \, (1 \, / \, \omega) \, \{(k - n) \, r - d \, / \, 2 + \Delta x \}$$

$$t_2 = (2)^{1/2} \, (1 \, / \, \omega) \, \{(k - n) \, r + d \, / \, 2 + \Delta x \}$$

It is easy to apply numerical integration to the above integration. If a complementary error function given by

$$E_r \, f_C(x) = \frac{2}{\sqrt{\pi}} \int_{x}^{\infty} e^{-t^2} \, dx$$

is used, we have

$$p_k = ( 1 \, / \, 2 ) \, \{ E_r \, f_c \, (t_2) - E_r \, f_c \, (t_1) \}$$

The relations of the theoretical values $p_{n-1}$, $p_n$, $p_{n+1}$, etc. found as described above to $\Delta x$ are next described.

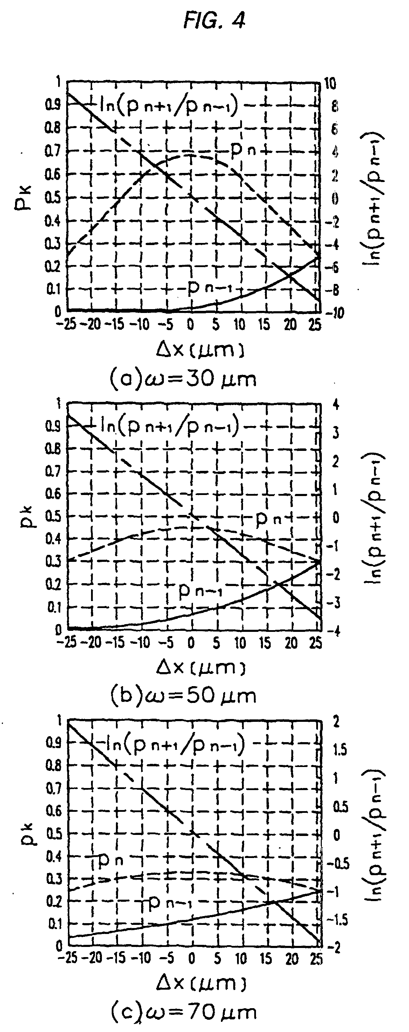

Fig. 4 shows diagrams illustrating the relations of $p_{n-1}$, $p_n$, ln $(p_{n+1} / p_{n-1})$ to $\Delta x$, it being noted that $p_{n+1}$ is obtained by horizontally inverting $p_{n-1}$.

In the above example, it is assumed that d = 30 μm. Fig. 4 shows cases in which r = 50 μm and $\omega$ = 30, 50, and 70, respectively. That is, logarithmic values of $p_{n+1} / p_{n-1}$, i.e., ln $(p_{n+1} / p_{n-1})$ have a substantially linear relation to $\Delta x$. Thus,

$$\ln (p_{n+1} / p_{n-1}) \propto \Delta x$$

Therefore, if actually measured values $P_{n-1}$, $P_n$, $P_{n+1}$ are obtained, $\Delta x$ can be easily found. The center wavelength $\lambda_0$ and the total power $P_{total}$ are found by the following equations:

$$\lambda_0 = \lambda_n - \Delta x \cdot \Delta \lambda \, / \, r$$

$$P_{total} = P_n \, / \, P_n$$

In the above-described method, the relation of ln $(p_{n+1}/p_{n-1})$ to $\Delta x$ is found in advance. The values of ln $(p_{n+1}/ p_{n-1})$ are found, using actually measured values of $P_{n+1}$ and $P_{n-1}$. Then, $\Delta x$ is found from the obtained values. The present invention is not limited to this scheme. The following method can also be adopted.

We first take notice of the linearity between ln $(p_{n+1} / p_{n-1})$ and $\Delta x$. This relation is approximated by a straight line passing through three points (- r / 2, ln $(p_{n+1} / p_{n-1})$), (0, 0), and (r / 2, ln $(p_{n+1} / p_{n-1})$). Calculations performed in advance are only for ln $(p_{n+1} / p_{n-1})$ where $\Delta x$ = r / 2 or - r / 2.

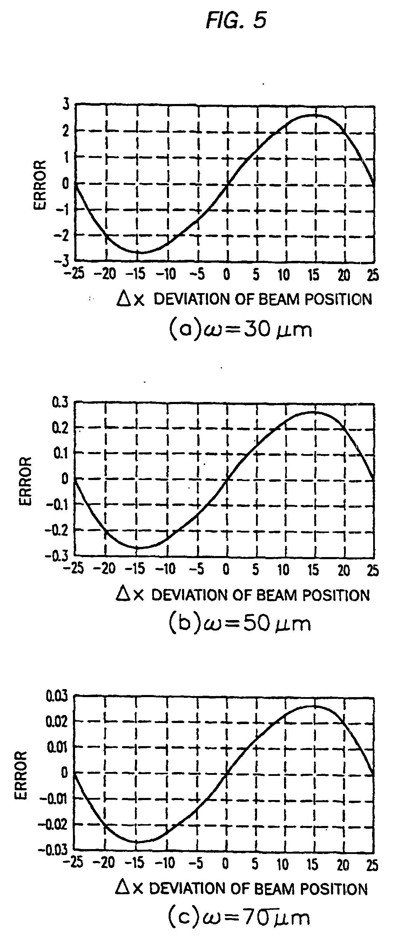

At this time, deviations of strictly obtained ln $(p_{n+1} / p_{n-1})$ from the above-described straight line are shown in Fig. 5, where r = 50 μm and d = 30 μm.

In this case, as $\omega$ decreases, the error is increased. However, where $\omega$ = 30 μm, the error is limited to ± 3%. Specifically, where the center wavelength is found by interpolation by the above-described method, it is assumed that

$$\lambda_0 = \lambda_n - \Delta x \cdot \Delta\lambda \, /r$$

It is also assumed that

$$\lambda_n = 1550.0 \text{ nm}$$

$$\Delta\lambda = 0.10 \text{ nm}$$

If $\Delta x$ contains error of $\pm$ 3%, $\lambda_0$ can be determined up to the order giving 0.01 nm. In actual optical systems, $\omega$ differs slightly among used single-mode fibers. However, $\omega$ remains fixed during measurement. Therefore, what must be known in advance is only the inclination of one straight line used for approximation.

What should be taken into consideration is only the ln $(p_{n+1}/ p_{n-1})$ when the absolute value of deviation $|\Delta x|$ assumes its maximum value, i.e., $\Delta x \pm r / 2$.

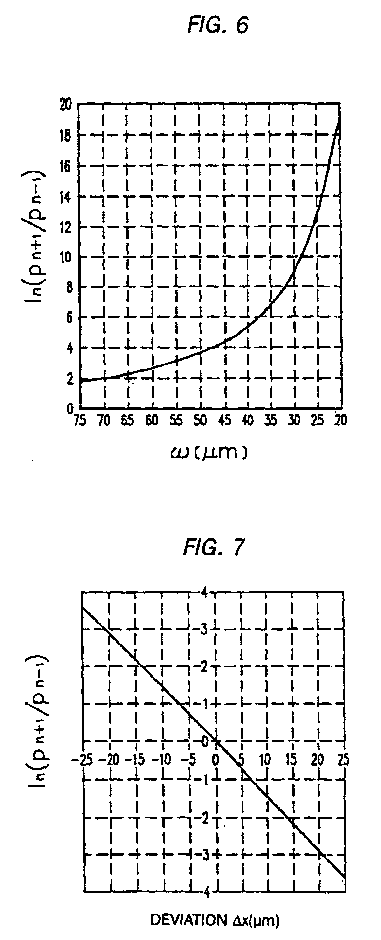

Fig. 6 shows the relation between ln $(p_{n+1}/ p_{n-1})$ and $\omega$, assuming that r = 50 $\mu$m, d = 30 $\mu$m and that $\Delta x = - r / 2 = -25$ $\mu$m.

In practical applications, a numerical integration may be used more conveniently than complementary error function $E_r f_c$ (x) when theoretical values of $p_{n-1}$, $p_n$, $p_{n+1}$ are found. Also, sufficient accuracy is obtained even if increments are not made very small.

Fig. 7 compares $E_r f_c$ (x) with ln $(p_{n+1}/ p_{n-1})$ found by Simpson's 1/3 rule (m = 1) under the condition $\omega$ = 50 $\mu$m, r = 50 $\mu$m, d = 30 $\mu$m. On the other hand, the total power can be found from $P_n / p_n$. The error of $p_n$ found by the Simpson's 1/3 rule under the above conditions is about 0.25%, which presents no practical problems.

The following values are actually obtained by measurements and have been normalized with $P_n$:

$$\vdots$$
$$\vdots$$

$$P_{n-1} = 0.489$$

$$P_n = 1 \qquad (\lambda_n = 1554.6 \text{ nm})$$

$$P_{n+1} = 0.130$$

$$\vdots$$
$$\vdots$$

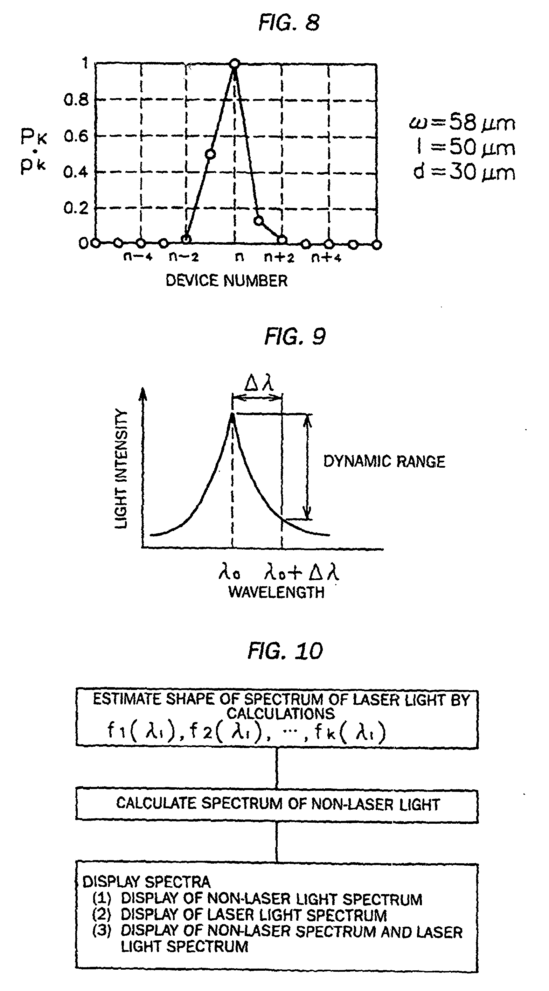

Fig. 8 compares these values with theoretical values $p_{n-1}$, $p_n$, $p_{n+1}$ found by the algorithm of the arithmetic unit 30 under the condition $\Delta x = 12.12$ $\mu$m. In practice, values normalized with $p_n = 0.365$ are plotted.

At this time,

$$\lambda_0 = 1554.6 - (12.12 / 50) \times 0.1$$

$$= 1554.576 \text{ (nm)}$$

Since the total power $P_{total}$ has been previously measured and found to be 11.6 nW, the scale of the vertical axis on which values obtained by actual measurements are plotted may be so set that values of $P_n$ are given by

$$P_n / p_n = 11.6 \text{ nW}$$

that is,

$$P_n = 11.6 \text{ nW} \times 0.365 = 4.23 \text{ nW}$$

As described thus far, the present invention yields the following advantages. When monochromatic light (laser light) is measured with an optical spectrum analyzer, it is required that the center wavelength and the power level have high accuracies. Where the output from a device array is used as it is, the accuracy of the center wavelength cannot be set higher than the wavelength difference $\Delta\lambda$ between devices of the array. Furthermore, some kind of calculation is indispensable for the total power. However, in the present invention, the accuracies of the center wavelength $\lambda_0$ and the total power $P_{total}$ can be easily enhanced by accurately finding the position of the beam on the device array.

It is expected that a wavelength division multiplexing communication system is used as a large-capacity transmission system. Signals transmitted by the system are carried by carriers, or laser light, and optical fiber amplifiers. The transmitted signals suffer from ASE (amplified spontaneous emission) noise. In this system, of course, the spectrum of the laser light must be measured accurately. In addition, it is important to evaluate the ASE noise which materially affects the S/N of the transmitted signal.

A spectrometer using a device array has no moving part and so it is optimally used as a transmission signal monitor for a wavelength division multiplexing communication system. However, the dynamic range is insufficient to detect ASE noise near the laser light.

Generally, the dynamic range of a spectrometer using a diffraction grating as a dispersing device is determined by the slope of the interference curve. More specifically, it is assumed that monochromatic light (laser light having wavelength $\lambda_0$) enters. The dynamic range is defined as the difference in level between the wavelength $\lambda_0$ and a wavelength deviating from that wavelength by offset $\Delta\lambda$, as shown in Fig. 9. Accordingly, feeble light close to the laser light is buried in the slope of the laser light.

For this reason, it is necessary to improve the dynamic range. The conventional method of improving the dynamic range of a spectrometer such as an optical spectrum analyzer is to arrange two or more monochromators in series. In this method, the dispersing devices (prisms or diffraction gratings) are made to follow so that the intrinsic light spectrum is separated from superimposed stray light. This is a so-called double monochromator system.

However, it is difficult to employ the above-described method in a spectrometer combining a device array and fixed dispersing device because of the mechanical problems. Accordingly, there is an earnest demand for other method.

Another embodiment of the invention which solves this problem is next described. This is an optical spectrum analyzer which is similar to the optical spectrum analyzer shown in Fig. 1 except that functions represented by the flowchart of Fig. 10 are added to the arithmetic unit 30 and that the following functions are added to the display unit 40.

The optical spectrum analyzer constructed in this way makes use of the fact that the shape of the spectrum obtained when laser light is measured can be estimated from the center wavelength and from the power. The instrument can measure ASE noise buried in laser light, and can equivalently enhance the dynamic range.

The operation is next described. The arithmetic unit arithmetically estimates the shape of the spectrum from the center wavelength and from the power of the laser light which are found as described above. It is assumed that the spectrum is composed of K wavelengths $f_1(\lambda i)$, $f_2(\lambda i)$, ... , $f_k(\lambda i)$. Then, the following formula is calculated:

$$M(\lambda_i) - \sum_K f_K(\lambda_i)$$

where M ($\lambda_i$) are data obtained by actual measurements. By this calculation, the spectrum of non-laser light spectrum, i.e., the spectrum of ASE noise, is found.

The display unit 40 has a function of displaying one or both of the light spectrum and the non-laser light spectrum found as described above on demand.

In the above embodiment, the light intensity distribution g ($\xi$, $\eta$) at the incident port is of the Gaussian type. The invention is not limited to this type. It may also be of the Lorentz type.

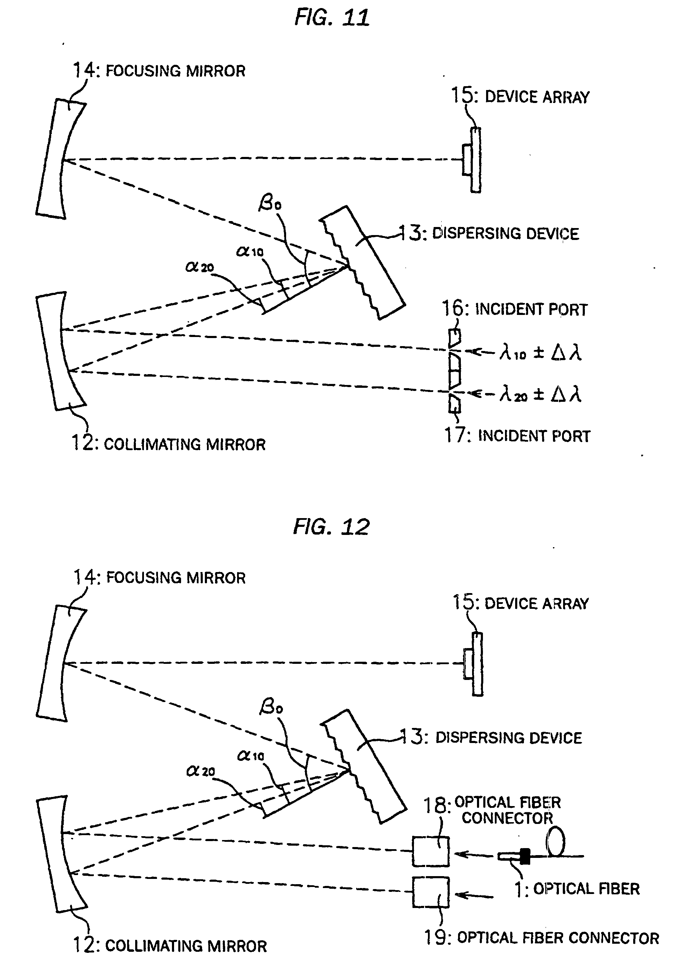

Other example of spectrometer is next described. In the above example of spectrometer, the wavelength resolution and the range of measured wavelengths are determined by the number of devices of the device array, the pitch, the focal distance of the focusing mirror, and other factor. Trade-offs are made between the wavelength resolution and the range of the measured wavelengths. Therefore, if one is improved, then the other is deteriorated. It is impossible to improve both at the same time. A spectrometer as shown in Fig. 11 solves this problem, and is provided with a plurality of incident ports, or slits. The instrument can extend the range of measured wavelengths while maintaining desired wavelength resolution.

Fig. 11 shows the spectrometer equipped with a plurality of incident ports. In this example, only two incident ports are shown, for simplicity. It is to be noted that like components are indicated by like numerals in both Figs. 1 and 11. Indicated by 16 and 17 are incident ports whose widths are adjusted by slits. Light having a wavelength range of $\lambda_{10} \pm \Delta\lambda$ enters from the incident port 16. Light having a wavelength range of $\lambda_{20} \pm \Delta\lambda$ enters from the incident port 17.

This spectrometer comprises one device array 15 which covers both wavelength ranges $\lambda_{10} \pm \Delta\lambda$ and $\lambda_{20} \pm \Delta\lambda$. The incident angles $\alpha_{10}$ and $\alpha_{20}$ of the two wavelengths to a diffraction grating 13 are so set that their diffraction angles for the center wavelengths $\lambda_{10}$ and $\lambda_{20}$ of the two wavelength ranges, respectively, are equal to $\beta_0$.

In the case of a light-dispersing instrument using a device array, the wavelength resolution is limited by some factors. It is now assumed that its theoretical resolution is limited by the number ($n_{ch}$) of the devices of the array and also by the range ($2\Delta\lambda$) of measured wavelengths. That is, if the theoretical resolution is defined as the difference between the difference in wavelength between adjacent devices, then the following equation holds:

$$\text{theoretical resolution} = 2 \Delta\lambda / (n_{ch} - 1) \doteqdot 2 \Delta\lambda / n_{ch}$$

where $n_{ch} \gg 1$.

In the configuration shown in Fig. 11, the range of measured wavelengths can be extended by a factor of two while maintaining the theoretical resolution. Even if the resolution is restricted by other factors, the range of measured wavelengths can be extended by a factor corresponding to the number of incident ports while maintaining the resolution.

The operation of the optical system shown in Fig. 11 is described in further detail. The fundamental equation for a diffraction grating is given by

$$\sin(\alpha) + \sin(\beta) = m \lambda / d$$

where $\alpha$ is the incident angle, $\beta$ is the diffraction angle, m is the order of diffraction, $\lambda$ is a wavelength, and d is a grating constant. From this fundamental equation, the diffraction angles $\beta_{10}$ and $\beta_{20}$ for the center wavelengths $\lambda_{10}$ and $\lambda_{20}$ of the two wavelength ranges are given by

$$\beta_{10} = \sin^{-1}(m \lambda_{10} / d - \sin(\alpha_{10}))$$

$$\beta_{20} = \sin^{-1}(m \lambda_{20} / d - \sin(\alpha_{20}))$$

If the incident ports are so set up that the incident angles $\beta_{10}$ $\beta_{20}$ satisfy the condition $\beta_{10} = \beta_{20}$, i.e.,

$$m\lambda_{10} / d - \sin(\alpha_{10}) = m \lambda_{20} / d - \sin(\alpha_{20})$$

then the following equation always holds for the deviation $\Delta\lambda$ from their respective center wavelengths:

$$m\{\lambda_{10} \pm \Delta\lambda) / d\} - \sin(\alpha_{10})$$

$$= m\{\lambda_{20} \pm \Delta\lambda) / d\} - \sin(\alpha_{20})$$

That is, if the two wavelength ranges, incident ports, incident angles, and center wavelengths are set as described above, the same device array can cover both wavelength ranges.

If more than two wavelengths exist, the same theory applies as long as the incident ports, incident angles, and center wavelengths are established as described above. The range of measured wavelengths can be extended while maintaining the desired resolution.

Fig. 12 shows a further embodiment of the present invention. Optical fiber connectors (receptacles) 18 and 19 are mounted at incident ports. One incident port is selected according to the measured wavelength, and optical fiber 1 is replaced.

Since the positions at which the optical fiber connectors 18 and 19 are mounted are fixed, the position of the incident light is not affected by replacement of the fiber.

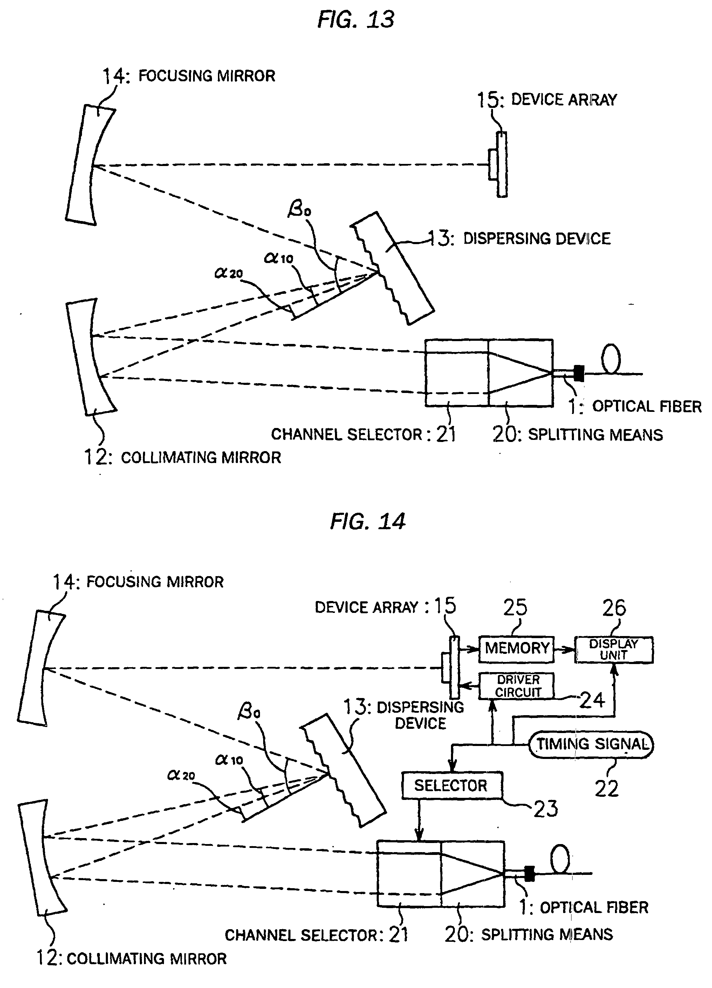

Fig. 13 shows a still other embodiment of the invention. A light-splitting means 20 is combined with an optical channel selector 21. The optical channel selector 21 is driven to pass only one of output light rays from the light-splitting means 20. An incident port is selected without replacing the optical fiber 1.

Fig. 14 shows a yet other embodiment of the invention. A timing signal generator 22 produces a timing signal. A driver circuit 24 acts to read the output from a device array 15. A switching control circuit 23 serves to switch the channel of an optical channel selector 21. The timing signal is supplied to the driver circuit 24 and to the switching control circuit 23 to synchronize the reading of the output from the device array 15 with the timing at which the channel of the optical channel selector 21 is switched. That is, the device array is swept in synchronism with the switching of the channel. Signals produced from plural channels during one period are alternately accepted. Thus, plural wavelength ranges are measured simultaneously, though a time difference corresponding to the sweep time exists.

Output signals from the devices of the array are stored in a memory 25. Signals from different wavelength ranges are arranged in the memory 25 in the order of passage of time. Signals from the desired wavelength range are read out in synchronism with the aforementioned timing signal and displayed on a display unit 26.

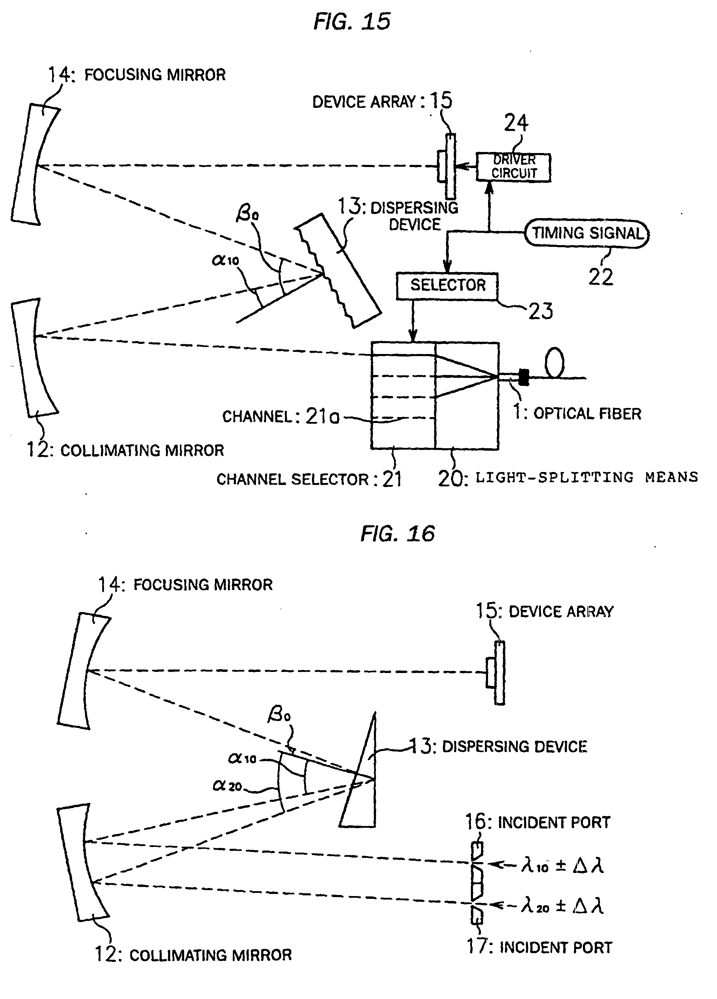

Fig. 15 shows an additional embodiment of the invention. In the configuration of Fig. 15, an optical channel selector 21 is equipped with a channel 21a on which no incident light impinges. Dark output is accepted on a real-time basis. The dark output can be canceled or corrected for measured values from a device array.

Fig. 16 shows a configuration in which a prism is used as a dispersing device 13. If incident ports are provided, taking account of the angular dispersion of the prism, then the foregoing theory applies.

It is to be understood that the description of the present invention provided thus far shows only certain preferred embodiments for illustrative purposes only. Accordingly, it is obvious that many modifications and changes are possible without departing from the scope of the invention, as defined in the claims.

## Claims

1.  An optical spectrum analyzer comprising:

    a spectrometer (10) having an incident port (11) for introducing light to be measured;
    a dispersing device (13) for receiving said introduced light;
    a device array (15) consisting of a plurality of photo detectors, and
    a focusing means (14) for focusing light going out of said dispersing device onto said device array;
    an arithmetic unit (30) having a function of calculating a center wavelength and a total power from output signals from said photo detectors and from a light power distribution at said incident port; and
    a display unit (40);

    wherein said arithmetic unit further having a function of calculating a spectrum shape of signal light from said center wavelength and total power and of determining background amplified spontaneous emission noise by subtracting the data of said calculated spectrum shape from the actual data and
    said display unit being adapted for displaying the spectrum of said measured light or the spectrum of light other than said measured light or both.

2.  The optical spectrum analyzer of claim 1, wherein a single-mode optical fiber is used at said incident port, and wherein said arithmetic unit takes the optical power distribution at the incident port as a Gaussian type and finds said center wavelength and total power by calculations.

3.  The optical spectrum analyzer of claim 1, wherein

    (A) a first one of said photo detectors produces a maximum output,
    (B) a second one and a third one of said photo detectors are located on opposite sides of said first photo detector, and
    (C) said arithmetic unit makes an approximation that logarithmic values of the ratio of an output from said second photo detector to an output from said third photo detector are in proportion to deviation of center of said first photo detector from center of incident beam and finds said center wavelength and total power by calculations.

## Patentansprüche

1.  Optischer Spektralanalysator mit:

einem Spektrometer (10), das eine Einfallsöffnung (11) zum Einleiten von zu messendem Licht aufweist;

einer Dispersionseinrichtung (13) zum Empfangen des eingeleiteten Lichts;

einem Vorrichtungsarray (15) aus einer Mehrzahl von Photodetektoren und

einer Fokussiereinrichtung (14) zum Fokussieren des aus der Dispersionseinrichtung austretenden Lichts auf dem Vorrichtungsarray;

einer Recheneinheit (30), die eine Funktion zum Berechnen einer Mittenwellenlänge und einer Gesamtleistung aus Ausgangssignalen von den Photodetektoren und aus einer Lichtleistungsverteilung an der Einfallsöffnung aufweist; und

einer Anzeigeeinheit (40);

wobei die Anzeigeeinheit ferner eine Funktion zum Berechnen einer Signallicht-Spektralform aus der Mittenwellenlänge und der Gesamtleistung und zum Bestimmen von Hintergrundrauschen mit verstärkter spontaner Emission umfasst, indem die Daten der berechneten Spektralform von den tatsächlichen Daten subtrahiert werden, und

die Anzeigeeinheit angepasst ist, um das Spektrum des gemessenen Lichts oder das von dem gemessenen Licht unterschiedliche Licht oder beide anzuzeigen.

**2.** Optischer Spektralanalysator gemäß Anspruch 1, wobei eine optische Einzel-Modenfaser an der Einfallsöffnung verwendet wird und wobei die Recheinheit annimmt, dass die optische Leistungsverteilung an der Einfallsöffnung vom Gaußschen Typ ist, und die Mittenwellenlänge und Gesamtleistung durch Berechnungen ermittelt.

**3.** Optischer Spektralanalysator gemäß Anspruch 1, wobei

(A) ein erster Photodetektor ein Maximalausgangssignal erzeugt,

(B) ein zweiter und ein dritter Photodetektor auf gegenüberliegenden Seiten des ersten Photodetektors angeordnet sind, und

(C) die Recheneinheit eine Näherung durchführt, dass logarithmische Werte des Verhältnisses eines Ausgangssignals von dem zweiten Photodetektor zu einem Ausgangssignal von dem dritten Photodetektor im Verhältnis zu einer Abweichung von der Mitte des ersten Photodetektors von der Mitte eines Einfallstrahls stehen, und die Mittenwellenlänge und Gesamtleistung durch Berechnungen ermittelt.

**Revendications**

**1.** Analyseur de spectre optique comprenant :

- un spectromètre (10) ayant un orifice incident (11) pour introduire une lumière à mesurer ;
- un dispositif de dispersion (13) pour recevoir la lumière introduite ;
- une matrice (15) composée d'une pluralité de photodétecteurs ; et
- des moyens de focalisation (14) pour focaliser vers ladite matrice la lumière venant dudit dispositif de dispersion ;
- une unité de calcul (30) ayant pour fonction de calculer une longueur d'onde centrale et une puissance totale à partir des signaux de sortie desdits photodétecteurs et une distribution de puissance lumineuse au niveau dudit orifice incident ;
- une unité d'affichage (40) ;
- ladite unité de calcul ayant en outre une fonction de calculer une forme spectrale de la lumière mesurée à partir desdites longueurs d'onde centrale et puissance totale et de déterminer un bruit de fond d'une émission spontanée amplifiée en faisant la différence entre les données réelles et les données de ladite forme spectrale calculée ;
- ladite unité d'affichage étant adaptée pour afficher le spectre de ladite lumière mesurée ou le spectre d'une lumière autre que ladite lumière mesurée ou les deux.

**2.** Analyseur de spectre optique selon la revendication 1, dans lequel une fibre optique monomode est utilisée au niveau dudit orifice incident et dans lequel ladite unité de calcul considère la distribution de puissance lumineuse au niveau de l'orifice incident comme étant du type gaussienne et détermine par calcul lesdites longueur d'onde centrale et puissance totale.

**3.** Analyseur de spectre optique selon la revendication 1, dans lequel :

(A) un premier desdits photodétecteurs produit une sortie maximale,

(B) un deuxième et un troisième desdits photodétecteurs sont situés de part et d'autre dudit premier photodétecteur, et

(c) ladite unité de calcul effectue une approximation pour que les valeurs logarithmiques du rapport entre une sortie dudit deuxième photodétecteur et une sortie dudit troisième photodétecteur soient proportionnelles à une déviation du centre dudit premier photodétecteur par rapport au centre du faisceau incident et détermine par calcul lesdites longueur d'onde centrale et puissance totale.

EP 0 760 469 B1

## FIG. 1

14: FOCUSING MIRROR

10: SPECTROMETER 15: DEVICE ARRAY

20: DRIVER    30: ARITHMETIC UNIT

13: DISPERSING DEVICE

LIGHT TO BE MEASURED

INCIDENT PORT

40: DISPLAY UNIT

11: SLIT

12: COLLIMATING MIRROR

## FIG. 2

$f(x,y)$

LIGHT-RECEIVING PORTION

## FIG. 3

CALCULATE NORMALIZED OUTPUTS
$p_1, ...., p_{n-1}, p_n, p_{n+1}, ...., p_{n0}$
FROM DEVICES

FIND RELATION OR RULE OF DEVIATION
$\Delta x$ AND ASSOCIATED PHOTO DETECTOR

START
MEASUREMENT

SUPPLY MEASURED VALUES
$P_1, ...., P_{n-1}, P_n, P_{n+1}, ...., P_{n0}$
TO ARITHMETIC UNIT 30 TO ARITH

CALCULATE $P_{n+1}/P_{n-1}$ AND ESTIMATE $\Delta x$

CALCULATE CENTER WAVELENGTH
$\lambda o = \lambda n - \Delta x \cdot \Delta \lambda / r$
AND TOTAL POWER Ptotal = Pn/pn

*FIG. 4*

(a) $\omega = 30 \, \mu m$

(b) $\omega = 50 \, \mu m$

(c) $\omega = 70 \, \mu m$

## FIG. 5

(a) $\omega = 30\,\mu m$

(b) $\omega = 50\,\mu m$

(c) $\omega = 70\,\mu m$

## FIG. 6

## FIG. 7

## FIG. 8

$$\omega = 58 \, \mu m$$
$$l = 50 \, \mu m$$
$$d = 30 \, \mu m$$

## FIG. 9

## FIG. 10

## FIG. 11

14: FOCUSING MIRROR

15: DEVICE ARRAY

$\beta_0$

$\alpha_{10}$

$\alpha_{20}$

13: DISPERSING DEVICE

16: INCIDENT PORT

$\leftarrow \lambda_{10} \pm \triangle \lambda$

$\leftarrow \lambda_{20} \pm \triangle \lambda$

12: COLLIMATING MIRROR

17: INCIDENT PORT

## FIG. 12

14: FOCUSING MIRROR

15: DEVICE ARRAY

$\beta_0$

$\alpha_{10}$

$\alpha_{20}$

13: DISPERSING DEVICE

18: OPTICAL FIBER CONNECTOR

1: OPTICAL FIBER

12: COLLIMATING MIRROR

19: OPTICAL FIBER CONNECTOR

## FIG. 13

14: FOCUSING MIRROR

15: DEVICE ARRAY

$\beta_0$

13: DISPERSING DEVICE

$\alpha_{10}$

$\alpha_{20}$

1: OPTICAL FIBER

CHANNEL SELECTOR: 21

20: SPLITTING MEANS

12: COLLIMATING MIRROR

## FIG. 14

14: FOCUSING MIRROR

DEVICE ARRAY: 15

25 MEMORY

26 DISPLAY UNIT

DRIVER CIRCUIT — 24

$\beta_0$

13: DISPERSING DEVICE

TIMING SIGNAL

22

$\alpha_{10}$

$\alpha_{20}$

SELECTOR

23

1: OPTICAL FIBER

CHANNEL SELECTOR: 21

20: SPLITTING MEANS

12: COLLIMATING MIRROR

## FIG. 15

14: FOCUSING MIRROR

DEVICE ARRAY : 15

24

DRIVER CIRCUIT

$\beta_0$

13: DISPERSING DEVICE

TIMING SIGNAL

22

$\alpha_{10}$

SELECTOR

23

CHANNEL : 21a

1 : OPTICAL FIBER

12: COLLIMATING MIRROR

CHANNEL SELECTOR : 21    20: LIGHT-SPLITTING MEANS

## FIG. 16

14: FOCUSING MIRROR

15: DEVICE ARRAY

$\beta_0$

$\alpha_{10}$

$\alpha_{20}$

13: DISPERSING DEVICE

16: INCIDENT PORT

$\lambda_{10} \pm \Delta\lambda$

$\lambda_{20} \pm \Delta\lambda$

12: COLLIMATING MIRROR

17: INCIDENT PORT